# EUROPÄISCHE PATENTANMELDUNG

(11) **EP 2 634 444 A1**
(43) Veröffentlichungstag der Anmeldung: **04.09.2013**
(21) Anmeldenummer: 12157415.6
(22) Anmeldetag: 29.02.2012
(51) Int. Cl.: F16D 33/18, F15B 1/08, F16K 17/38

(54) **Verschluss mit thermischer Sicherungsfunktion**

(71) Anmelder: Siemens Aktiengesellschaft, 80333 München (DE)
(72) Erfinder: Mallmann, Hans-Jochen, 48653 Coesfeld (DE); Willing, Jan, 46499 Hamminkeln (DE)

(57) **Zusammenfassung**

Die Erfindung betrifft einen Verschluss (1) mit thermischer Sicherungsfunktion zum fluiddichten Verschließen einer Öffnung eines Behälters, eine hydrodynamische Kupplung mit einem derartigen Verschluss, sowie eine Anwendung des Verschlusses. Der Verschluss (1) umfasst einen mit einem Durchlass (4) versehenen Verschlusskörper (5). Der Verschlusskörper (5) ist, mit einem auf einer Achse (6) des Verschlusskörpers (5) liegenden, ersten Endabschnitt (5a) voraus, in die Behälteröffnung einführbar und darin lösbar fixierbar. Der Verschluss (1) umfasst außerdem ein in den Durchlass (4) eingefügtes Schmelzsicherungselement (7), welches den Durchlass (4) zumindest mittelbar verschlossen hält. Der Durchlass (4) verläuft von einem Einlass (4a) im ersten axialen Endabschnitt (5a) zu einem Auslass (4b) in einem zweiten, entgegen gesetzten axialen Endabschnitt (5b) des Verschlusskörpers (5). Der Durchlass (4) weist einen ersten, am Einlass (4a) beginnenden Durchlassabschnitt (41) und einen zweiten, an den mindestens einen Einlasskanal (8) anschließenden Durchlassabschnitt (42) auf. Der erste Durchlassabschnitt 41 besteht aus mindestens einem Einlasskanal (8), welcher unter einem Winkel α größer 0 Grad bezogen auf den zweiten Durchlassabschnitt (42) verläuft Das Schmelzsicherungselement (7) ist zumindest in dem mindestens einen Einlasskanal (8) angeordnet.

## Beschreibung

Die vorliegende Erfindung betrifft einen Verschluss mit thermischer Sicherungsfunktion, eine hydrodynamische Kupplung mit einem derartigen Verschluss, sowie eine Anwendung des Verschlusses.

Verschlüsse mit thermischer Sicherungsfunktion sind bekannt. Insbesondere wird eine hydrodynamische Kupplung mit einem eine Betriebsflüssigkeit aufnehmenden Kupplungsgehäuse in der Regel mit einer Schmelzsicherung ausgestattet. Eine solche Schmelzsicherung dichtet im Normalbetrieb den mit der Betriebsflüssigkeit gefüllten Innenraum der Kupplung gegenüber der Umgebung ab, öffnet aber im Falle eines übermäßigen Anstiegs der Temperatur der Betriebsflüssigkeit bei einer festgelegten Schwelltemperatur das Kupplungsgehäuse, so dass die Betriebsflüssigkeit entweichen kann.

Dazu weist die Schmelzsicherung ein bei einer vorgegebenen Temperatur aufschmelzbares Schmelzsicherungselement auf, das in einen in das Kupplungsgehäuse einschraubbaren und mit einer Durchgangsbohrung versehenen Schraubenkörper eingesetzt ist. EP 1 577 577 A2 beschreibt eine Schmelzsicherung, bei der das Schmelzsicherungselement einen Pfropfen bildet, welcher die Durchgangsbohrung des Schraubenkörpers unmittelbar verschließt. DE 103 61 453 B3 beschreibt eine Schmelzsicherung, bei der das Schmelzsicherungselement die Durchgangsbohrung des Schraubenkörpers mittelbar verschließt: das Schmelzsicherungselement fixiert einen die Durchgangsbohrung des Schraubenkörpers verschließenden Bolzen und gibt diesen bei Erreichen der Schwelltemperatur frei.

Aufgabe der vorliegenden Erfindung ist es, einen Verschluss mit thermischer Sicherungsfunktion anzugeben, welcher gegenüber dem Stand der Technik verbessert ist.

Die Aufgabe wird erfindungsgemäß durch einen Verschluss mit den in Anspruch 1 angegebenen Merkmalen gelöst.

Der erfindungsgemäße Verschluss hat eine thermische Sicherungsfunktion zum fluiddichten Verschließen einer Öffnung eines Behälters. Die thermische Sicherungsfunktion bedeutet, dass der Verschluss, der eine Temperatur in Abhängigkeit einer Temperatur des Fluids im Innenraum des Behälters annimmt, unterhalb einer vorgegebenen Grenztemperatur fluiddicht verschlossen hält und sich bei Erreichen der Grenztemperatur selbsttätig öffnet, so dass das Fluid durch den Durchlass aus dem Behälter ausströmen kann. Das selbsttätige Öffnen des Durchlasses wird durch das Schmelzsicherungselement erreicht, das bei der Grenztemperatur seine Festigkeitseigenschaften ändert, insbesondere schmilzt, und somit den Durchlass in dem Verschlusskörper frei gibt. Durch diese thermische Sicherungsfunktion werden eine Überhitzung des Fluids und ein unzulässig hoher Überdruck in dem Behälter vermieden.

Dabei umfasst der Verschluss einen Verschlusskörper und ein Schmelzsicherungselement. Der Verschlusskörper ist, mit einem auf einer Achse des Verschlusskörpers liegenden, ersten Endabschnitt voraus, in die Behälteröffnung einführbar und darin lösbar fixierbar. Dabei ist der Verschlusskörper mit einem Durchlass versehen, welcher sich von einem Einlass im ersten axialen Endabschnitt zu einem Auslass in einem zweiten, entgegengesetzten axialen Endabschnitt des Verschlusskörpers erstreckt. Dabei weist der Durchlass einen ersten, am Einlass beginnenden Durchlassabschnitt und einen zweiten, an den mindestens einen Einlasskanal anschließenden Durchlassabschnitt auf. Der erste Durchlassabschnitt besteht aus mindestens einem Einlasskanal, welcher unter einem Winkel α größer 0 Grad, bezogen auf den zweiten Durchlassabschnitt verläuft. Das Schmelzsicherungselement ist zumindest in dem mindestens einen Einlasskanal des Durchlasses angeordnet und hält den Durchlass zumindest mittelbar verschlossen.

Der erste Durchlassabschnitt und der zweite Durchlassabschnitt verlaufen also nicht entlang einer gemeinsamen Achse, sondern die Längsachsen der Durchlassabschnitte verlaufen winkelig zueinander, d.h. bilden einen Winkel α größer 0 Grad.

Als Fluid kann der Behälter eine Flüssigkeit, z.B. ein Öl oder Wasser, enthalten, das einen Druck auf die Wände des Behälters, und dadurch auch auf einen in eine Öffnung des Behälters eingesetzten Verschluss, ausübt. Das Fluid wird auch Betriebsfluid oder Betriebsmedium genannt.

Der Erfindung liegt die Erkenntnis zugrunde, dass durch einen winkeligen Verlauf des Durchlasses, bei der ein am Einlass beginnender Durchlassabschnitt in Form eines winkelig zu einem daran anschließenden Durchlassabschnitt verlaufenden Einlasskanals ausgebildet ist, die von dem Betriebsfluid hervorgerufene Druckkraft in einer Richtung, die axial auf dem Schmelzsicherungselement lastet und zu einem Herausdrücken des Schmelzsicherungselements aus dem Verschlusskörper führen kann, geringer als bei bekannten Verschlüssen ist, bei denen der Durchlass über seine gesamte Länge axial gerade verläuft. Dadurch kann der Verschluss signifikant höheren Betriebsdrücken standhalten, ohne dass das Schmelzsicherungselement aus dem Verschlusskörper herausgedrückt wird, bevor die Schmelztemperatur des Schmelzsicherungselements erreicht wurde.

Im Gegensatz zu bekannten Verschlüssen mit einem axial geraden Verlauf des Durchlasses, bei denen das Schmelzsicherungselement durch eine eine Auflage für das Schmelzsicherungselement bildende Durchlassverengung formschlüssig gehalten wird, ist bei der vorliegenden Erfindung keine nachteilige Durchlassverengung nötig. Bei der vorliegenden Erfindung kann der Durchlass über seinen gesamten Verlauf mit einem unverminderten Querschnitt ausgebildet werden und trotzdem eine verlässliche Fixierung des Schmelzsicherungselements in dem Durchlass durch Formschluss erreicht werden. Dabei ist das Schmelzsicherungselement zumindest in dem mindestens einen Einlasskanal angeordnet, d.h. entweder ausschließlich in dem mindestens einen Einlasskanal oder sowohl in dem mindestens einen Einlasskanal als auch in einem daran anschließenden Durchlassabschnitt.

Durch die verringerte axiale Kraft auf das Schmelzsicherungselement verlängert sich seine Lebensdauer. Außerdem wird die Ansprechgenauigkeit auf eine durch das Material des Schmelzsicherungselements, z.B. ein Schmelzlot, vorgegebene Auslösetemperatur höher, weil durch den Druck hervorgerufene Einflüsse, die bisher durch Wärme hervorgerufene Einflüsse auf das Schmelzsicherungselement überlagerten, vermindert bzw. zurückgedrängt werden. Bei einer Schmelzsicherungsschraube, die gemäß der vorliegenden Erfindung ausgestaltet ist, ist also die thermische Sicherungsfunktion besser ausgeprägt als bei herkömmlichen Schmelzsicherungsschrauben, bei denen sich Druck und Temperatur in einem stärkeren Maße überlagern, wodurch es zu einer Verfälschung der thermischen Sicherungsfunktion kommen kann.

Eine vorteilhafte und naheliegende Anwendung des Verschlusses nach einem der Ansprüche 1 bis 12 ist dessen Nutzung als eine Schmelzsicherung, insbesondere in Form einer Schmelzsicherungsschraube, für eine hydrodynamische Kupplung mit einem eine Betriebsflüssigkeit aufnehmenden Kupplungsgehäuse.

Die Erfindung bietet also eine technisch einfache und kostengünstige Lösung für das bei herkömmlichen Schmelzsicherungsschrauben bekannte Problem, dass bei höheren Drücken der Betriebsflüssigkeit in der hydrodynamischen Kupplung der Lotpfropfen aus der Schraube herausgedrückt wird, ohne dass die Schmelztemperatur des Lotmaterials erreicht wurde. Die vorliegende Erfindung ist insbesondere bei solchen Anwendungen nützlich, welche die Schmelzsicherungsverschlüsse an die Grenzen bezüglich Lotfestigkeit und Festigkeit der Lot-Schraube-Verbindung bringen. Vor allem in diesen Fällen können die Schmelzsicherungsschrauben versagen, ohne dass die Schmelztemperatur des Lotmaterials (auch Ansprechtemperatur genannt) erreicht wurde.

Vorteilhafte Ausgestaltungen und Weiterbildungen der Erfindung sind in den abhängigen Ansprüchen angegeben.

Es ist möglich, dass der Winkel α in einem Bereich von 10 bis 170 Grad, vorzugsweise von 45 bis 135 Grad, weiter vorzugsweise von 85 bis 95 Grad, liegt. Da die Längsachse des Einlasskanals nicht parallel zu der Achse des zweiten Durchlassabschnitts Verschlusskörpers liegt, ist die in Richtung des zweiten Durchlassabschnitts wirkende Kraftkomponente des Betriebsdrucks in dem Behälter, z.B. einer hydrodynamischen Kupplung, reduziert. Je näher der Winkel α bei 90 Grad liegt, umso mehr verringert sich die axiale Belastung auf das Schmelzsicherungselement. Wenn der mindestens eine Einlasskanal unter einem Winkel α von 90 Grad zu der Richtung des zweiten Durchlassabschnitts bzw. - im Falle einer Parallelität von zweitem Durchlassabschnitt und Verschlussachse - zu der Richtung der Verschlussachse verläuft, verschwindet die axiale Kraftkomponente völlig.

Es ist vorteilhaft, wenn der mindestens eine Einlasskanal jeweils als eine quer zur Achse des Verschlusskörpers verlaufende Querbohrung ausgebildet ist, die mit einer axialen Sackbohrung kommunizierend verbunden ist, welche sich vom zweiten axialen Endabschnitt her bis zu der Querbohrung erstreckt. Bohrungen können in einem Verschlusskörper einfach und schnell ausgebildet werden. Die beschriebene Ausgestaltung kann einfach dadurch erreicht werden, dass von dem zweiten axialen Endabschnitt des Verschlusskörpers her und entlang der Achse des Verschlusskörpers eine Sackbohrung in dem Verschlusskörper ausgebildet wird und quer dazu eine oder mehrere Querbohrungen, die eine Verbindung zu der Sackbohrung aufweisen, in dem Verschlusskörper ausgebildet werden. Dabei bleibt der Verschlusskörper vorzugsweise an der Stirnseite des ersten Endabschnitts verschlossen. Auf diese Weise kann der Betriebsdruck in dem Behälter nicht mehr ausschließlich in Richtung der Verschlussachse auf das Schmelzsicherungselement wirken.

Es ist vorteilhaft, wenn der Verschlusskörper N Querbohrungen aufweist, wobei N eine natürliche Zahl (d.h. 1, 2, 3, etc.) ist. Durch eine Anordnung von mehreren Querbohrungen steht das Betriebsfluid insgesamt auf einer größeren Fläche und verteilt über mehrere Seiten mit dem Schmelzsicherungselement in thermischen Kontakt. Je mehr Querbohrungen ausgebildet sind, desto größer ist die gesamte Kontaktfläche zwischen dem Schmelzsicherungselement und dem in dem Behälter vorhandenen Betriebsfluid. Folglich kann die Verzögerung, mit der die Temperatur des Schmelzsicherungselements, z.B. des Lots eines Lotpfropfens, Temperaturänderungen des Betriebsfluid folgt, minimiert werden, was vorteilhaft für das Temperaturansprechverhalten des Verschlusses ist. Durch die größere und gleichmäßigere Wärmeübertragungsfläche spricht der Verschluss früher und präziser an.

Gemäß einer vorteilhaften Weiterbildung der Erfindung durchdringt der mindestens eine Einlasskanal den Verschlusskörper vollständig. Insbesondere kann ein derartiger Einlasskanal als eine den Verschlusskörper vollständig durchdringende Querbohrung ausgebildet sein. Somit wird das Schmelzsicherungselement hauptsächlich quer zu der Achse des Verschlusses beaufschlagt. Ein quer verlaufender Einlasskanal lenkt die Druckkraft gleichmäßig von den Seiten her auf das Schmelzsicherungselement, welches z.B. in Form eines Lotpfropfens ausgebildet ist. Dabei heben sich die paarweise entlang eines Einlasskanals gegeneinander wirkenden Kräfte näherungsweise auf, so dass die resultierende Kraft derart gering ist, dass sie von dem Schmelzsicherungselement problemlos getragen werden kann, d.h. ohne ein vorzeitiges Herausdrücken des Schmelzsicherungselements aus dem Verschlusskörper. Durch die besondere Geometrie des Durchlasses wird also die Kraft, die in Richtung der Längsachse des Verschlusskörpers auf dem Schmelzsicherungselement lastet, erheblich vermindert. Da die paarweise gegeneinander wirkenden Druckkräfte das Schmelzsicherungselement hauptsächlich seitlich zusammendrücken, wird einem unerwünschten vorzeitigen Herausdrücken des Schmelzsicherungselements aus dem Verschlusskörper vorgebeugt.

Es ist vorteilhaft, wenn der Verschlusskörper als ein Schraubenkörper ausgebildet ist, welcher an seinem äußeren Umfang ein Gewinde zum Eindrehen in ein in der Behälteröffnung angeordnetes Gegengewinde aufweist. Ein Außengewinde des Verschlusskörpers erlaubt eine Verwendung des Verschlusses als eine Schraube, die einfach und sicher in einer Öffnung des Behälters fixiert werden kann. Auch ein Austausch einer derartigen Schmelzsicherungsschraube ist einfach.

Es ist möglich, dass eine Stirnseite des ersten Endabschnitts des Verschlusskörpers, welche bei Betrachtung des Verschlusses entlang der Achse des Verschlusskörpers sichtbar ist, eine geschlossene Fläche ist. Die beschriebene Ausgestaltung kann beispielsweise einfach dadurch erreicht werden, dass von dem zweiten axialen Endabschnitt des Verschlusskörpers her und entlang der Achse des Verschlusskörpers ein Auslasskanal in dem Verschlusskörper ausgebildet wird und quer dazu ein oder mehrere Einlasskanäle, die eine Verbindung zu dem Auslasskanal aufweisen, in dem Verschlusskörper ausgebildet werden. Dabei erstreckt sich der Auslasskanal nicht über die gesamte Länge des Verschlusskörpers, sondern endet in Form eines Sacklochs; somit bleibt der Verschlusskörper an der Stirnseite des ersten Endabschnitts verschlossen. Auf diese Weise kann der Betriebsdruck in dem Behälter nicht mehr in Richtung der Verschlussachse, sondern nur senkrecht dazu auf das Schmelzsicherungselement wirken.

Es ist vorteilhaft, dass die Größe der Öffnung des mindestens einen Einlasskanals variiert werden kann. Dies bietet eine weitere Möglichkeit, die auf das Schmelzsicherungselement wirkende Kraft einzustellen. Außerdem kann durch die lichte Weite des Einlasskanals der Volumenstrom, der nach einem Auslösen des Schmelzsicherungselements durch den Durchlass fließt, eingestellt werden.

Es ist möglich, dass der erste axiale Endabschnitt als ein Zapfen ausgebildet ist. Dabei kann der Zapfen zylinderförmig ausgebildet sein oder mindestens eine ebene Seitenwand aufweisen. Wenn die Behälterwände seitlich dicht an dem Verschluss anstehen, kann durch eine seitliche Ausnehmung am Zapfen ein Kanal zwischen dem Verschlusskörper und der benachbarten Behälterwand ausgebildet werden, durch den das Fluid zu dem Einlass fließen kann.

Ein weiterer Aspekt der Erfindung betrifft eine hydrodynamische Kupplung, umfassend ein eine Betriebsflüssigkeit aufnehmendes Kupplungsgehäuse mit einer Öffnung und einen erfindungsgemäßen oder einen wie oben beschrieben weitergebildeten Verschluss, wobei der Verschluss mit dem ersten axialen Endabschnitt voraus in die Behälteröffnung eingeführt und darin lösbar fixiert ist. Dabei steht der in der Behälteröffnung fixierte Verschluss in thermisch leitender Verbindung mit dem Inhalt des Hohlraums.

Es ist möglich, dass der Durchlass in dem im Einbauzustand des Verschlusses zum Inneren des Kupplungsgehäuses hin orientierten ersten axialen Endabschnitt des Verschlusskörpers unter einem Winkel α größer 0 Grad zur Achse des Verschlusskörpers in den Verschlusskörper eintritt. Falls die Längsachse des Einlasskanals nicht parallel zu der Achse des Verschlusskörpers liegt, ist die in Richtung der Verschlussachse wirkende Kraftkomponente des Betriebsdrucks in der hydrodynamischen Kupplung reduziert. Je näher der Winkel α bei 90 Grad liegt, umso mehr verringert sich die Belastung auf das Schmelzsicherungselement.

Es ist möglich, dass der mindestens eine Einlasskanal so im Verschlusskörper angeordnet ist, dass in einem in das Betriebsfluid eingetauchten Zustand des Verschlusses die Betriebsflüssigkeit den Einlasskanal unmittelbar kontaktiert. Je besser der Kontakt zwischen dem Betriebsfluid und dem Einlasskanal, desto geringer ist die Verzögerung, mit der die Temperatur des Schmelzsicherungselements, z.B. des Lots eines Lotpfropfens, Temperaturänderungen des Betriebsfluid folgt. Dadurch wird das Temperaturansprechverhalten des Verschlusses verbessert.

Im Folgenden wird die Erfindung anhand mehrerer Ausführungsbeispiele unter Zuhilfenahme der beiliegenden Zeichnungen erläutert. Es zeigt jeweils schematisch und nicht maßstabsgetreu
- Fig. 1: einen Schnitt einer ersten Ausführungsform eines erfindungsgemäßen Verschlusses;
- Fig. 2: einen Schnitt eines Ausführungsbeispiels einer erfindungsgemäßen hydrodynamischen Kupplung;
- Fig. 3: einen Schnitt einer Schmelzsicherungsschraube nach dem Stand der Technik;
- Fig. 4-6: Schnitte verschiedener Ausführungsformen eines erfindungsgemäßen Verschlusses;
- Fig. 7: einen Schnitt einer weiteren Ausführungsform eines erfindungsgemäßen Verschlusses;
- Fig. 8: eine Schrägansicht der in Fig. 7 gezeigten Ausführungsform;
- Fig. 9: einen Schnitt und Ansichten einer weiteren Ausführungsform eines erfindungsgemäßen Verschlusses; und
- Fig. 10-12: Schnitte weiterer Ausführungsformen eines erfindungsgemäßen Verschlusses.

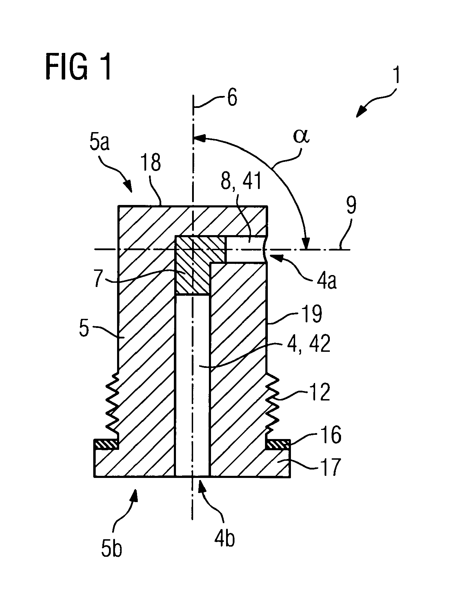

Fig. 1 zeigt einen Schnitt einer ersten Ausführungsform eines erfindungsgemäßen Verschlusses 1. Der Verschluss 1 umfasst einen Verschlusskörper 5 und ein Schmelzsicherungselement 7. Der Verschlusskörper 5 ist, mit einem auf einer Achse 6 des Verschlusskörpers 5 liegenden, ersten Endabschnitt 5a voraus, in eine Behälteröffnung eines Behälters einführbar und darin lösbar fixierbar. Dabei ist der Verschlusskörper 5 mit einem Durchlass 4 versehen, welcher sich von einem Einlass 4a im ersten axialen Endabschnitt 5a zu einem Auslass 4b in einem zweiten, entgegengesetzten axialen Endabschnitt 5b des Verschlusskörpers 5 erstreckt. Der Durchlass 4 umfasst einen ersten, am Einlass 4a beginnenden Durchlassabschnitt 41 und einen zweiten Durchlassabschnitt 42, welcher an den ersten Durchlassabschnitt 41 anschließt. Das Schmelzsicherungselement 7 ist in den Durchlass 4 eingefügt und hält ihn zumindest mittelbar verschlossen. Der erste Durchlassabschnitt 41 besteht aus mindestens einem quer zur Achse 6 des Verschlusskörpers 5 verlaufenden Einlasskanal 8, dessen Längsachse 9 mit der Achse des zweiten Durchlassabschnitts 42, die mit der Achse 6 des Verschlusskörpers zusammenfällt, einen Winkel α von ca. 90 Grad bildet. Der Einlasskanal 8 tritt an einer Seite des Verschlusskörpers 5 aus dem Verschlusskörper 5 aus.

Der Verschlusskörper 5 ist als ein Schraubenkörper ausgebildet und besitzt an seinem äußeren Umfang 19 ein Gewinde 12 zum Eindrehen in ein in der Behälteröffnung angeordnetes Gegengewinde.

Der zweite axiale Endabschnitt 5b weist einen Schraubenkopf 17 auf, so dass der Verschluss 1 mittels eines Schraubwerkzeugs, z.B. eines Schraubenschlüssels oder eines Innensechskantschlüssels, in eine Behälteröffnung eingeschraubt werden kann. Um den Schraubenkopf 17 herum ist eine Dichtung 16, z.B. ein Polymer-Dichtring, angeordnet, die einem fluiddichten Anschluss des Schraubenkopfs 17 an die Behälterwand dient.

Dadurch, dass der Einlasskanal 8 quer zu der Achse 6 des Verschlusskörpers verläuft und die Mündungsöffnung des Einlasskanals 8 im Außenumfang 19 des Verschlusses 1 liegt, ist die Stirnseite 18 des ersten Endabschnitts 5a des Verschlusskörpers 5, welche bei Betrachtung des Verschlusses 1 entlang der Achse 6 des Verschlusskörpers 5 sichtbar ist, eine geschlossene Fläche, d.h. ohne Öffnungen. Durch die Queranordnung des Schmelzsicherungselements 7 wirkt die durch den Betriebsdruck in dem Behälter erzeugte Kraft nicht in Richtung der Verschlussachse 6, sondern nur senkrecht dazu auf das Schmelzsicherungselement 7.

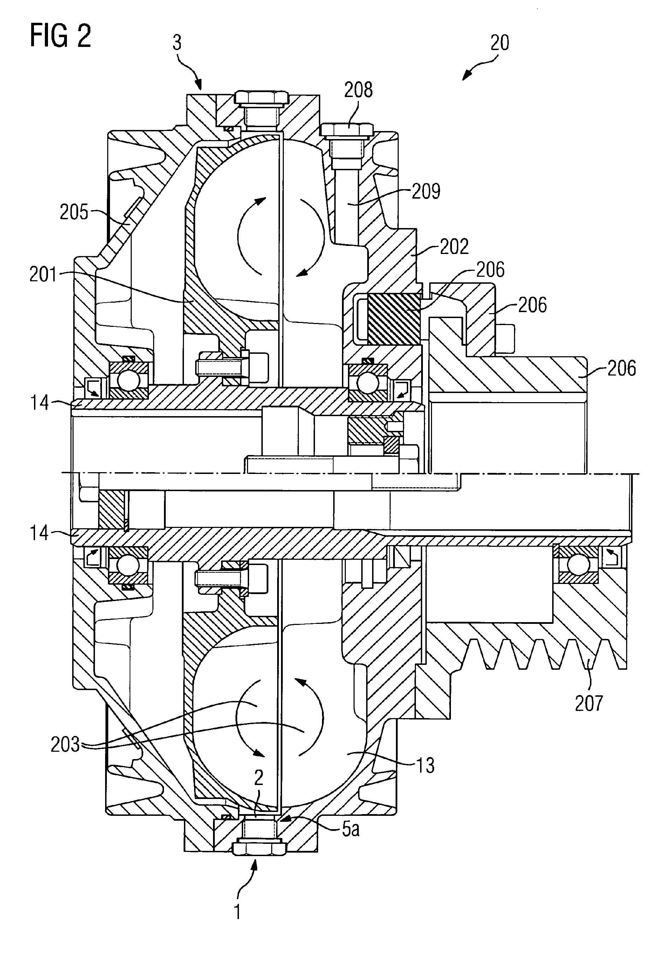

Fig. 2 zeigt einen Schnitt eines Ausführungsbeispiels einer erfindungsgemäßen hydrodynamischen Kupplung 20. Die hydrodynamische Kupplung 20 besteht aus einem Pumpen- oder Innenrad 201 und aus einem Turbinen- oder Außenrad 202, die durch einen engen Spalt voneinander getrennt sind. Jedes der beiden Räder besitzt einen Halbringraum 203 mit radial verlaufenden Schaufeln, die spiegelbildlich zueinander angeordnet sind. Das Innenrad 201 ist auf einer Hohlwelle 14 befestigt, die von einem nicht gezeigten Motor angetrieben ist. Das Außenrad 202 ist mit einem das Innenrad 201 umschließenden Deckel 205 verbunden und bildet zusammen mit dem Deckel 205 das Kupplungsgehäuse 3 der hydrodynamischen Kupplung 20. An dem Außenrad 202 ist als Verbindung zu einer nicht gezeigten Arbeitsmaschine eine elastische Kupplung 206 (oberer Teil der Fig. 2) oder eine Keilriemenscheibe 207 (unterer Teil der Fig. 2) befestigt, die auf einer Verlängerung der Hohlwelle 14 gelagert ist.

Im Inneren der Kupplung 20 befindet sich Öl oder Wasser als Betriebsflüssigkeit 13, die solange in einem durch die Pfeile in Fig. 2 angedeuteten Strömungskreislauf gehalten ist, wie das Innenrad 201 und das Außenrad 202 unterschiedliche Drehzahlen aufweisen. Bei gleicher Drehzahl von Innenrad 201 und Außenrad 202 kommt der Flüssigkeitsstrom zum Stillstand.

Das Kupplungsgehäuse 3 ist mit einem durch eine Einfüllschraube 208 gesicherten Einfüllkanal 209 und einer erfindungsgemäßen Verschlussschraube 1 versehen. Die Verschlussschraube 1 weist einen Durchlass auf und ist in das Kupplungsgehäuse 3 eingeschraubt. Dabei ist der Verschluss 1 mit einem ersten axialen Endabschnitt 5a voraus in eine Öffnung 2 des Kupplungsgehäuses 3 eingeführt und darin lösbar fixiert.

Wenn sich beim Betrieb der Kupplung 20 die Betriebsflüssigkeit 13 z.B. aufgrund innerer Reibung erwärmt, vergrößert sie ihr Volumen. Dadurch steigt der Druck im Inneren des luftdichten Kupplungsgehäuses 3, der außer auf den Wänden des Kupplungsgehäuses 3 auch auf dem Verschluss 1 lastet. Außerdem übt eine durch eine Rotation des Kupplungsgehäuses 3 hervorgerufene Fliehkraft über die Betriebsflüssigkeit 13 einen Druck auf den Verschluss 1 aus.

Durch die erfindungsgemäße Geometrie des einen oder der mehreren Einlasskanäle wird die auf dem Schmelzsicherungselement, z.B. in Form eines Lotpfropfens, lastende Druckkraft verringert. Das Risiko eines vorzeitigen Herausdrückens des Lotpfropfens, bevor die Temperatur im Inneren des Kupplungsgehäuses 3 die Schmelztemperatur des Schmelzsicherungselements erreicht, wird somit verringert.

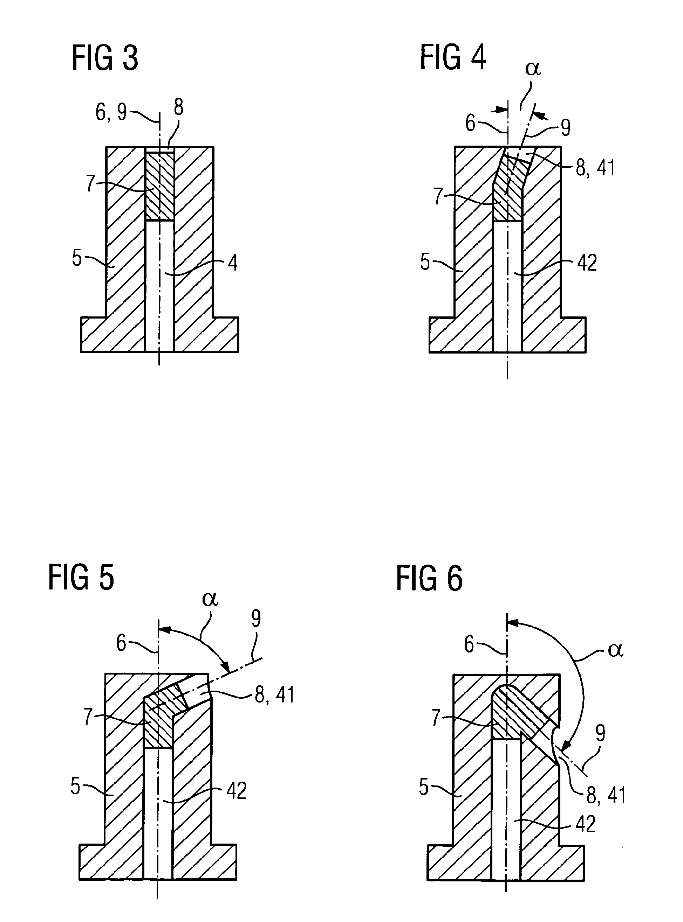

Fig. 3 zeigt einen Schnitt einer Schmelzsicherungsschraube nach dem Stand der Technik. Dabei verläuft der Durchlass 4 geradlinig und so, dass seine Längsachse 9 mit der Achse 6 des Verschlusskörpers 5 zusammenfällt. Dadurch kann bei Anwendungen, bei denen relativ hohe Drücke vorliegen und die Schmelzsicherungsverschlüsse an die Grenzen bezüglich Lotfestigkeit und Festigkeit der Lot-Schraube-Verbindung kommen, das Problem auftreten, dass der Lotpfropfen 7 aus der Schraube 5 herausgedrückt wird, ohne dass die Schmelztemperatur des Lotmaterials erreicht wurde.

Figs. 4, 5 und 6 zeigen Schnitte verschiedener Ausführungsformen eines erfindungsgemäßen Verschlusses in Form einer Schmelzsicherungsschraube. Gegenüber der in Fig. 3 gezeigten herkömmlichen Schmelzsicherungsschraube bildet bei den in Fig. 4 bis 6 dargestellten Ausführungsformen die Längsachse 9 des Einlasskanals 8 mit der Achse des zweiten Durchlassabschnitts, die hier mit der Achse 6 des Verschlusskörpers 5 zusammenfällt, einen Winkel α, größer 0 Grad. Dabei liegt der Winkel α in Fig. 4 bei ca. 25 Grad, in Fig. 5 bei ca. 65 Grad und in Fig. 6 bei ca. 135 Grad.

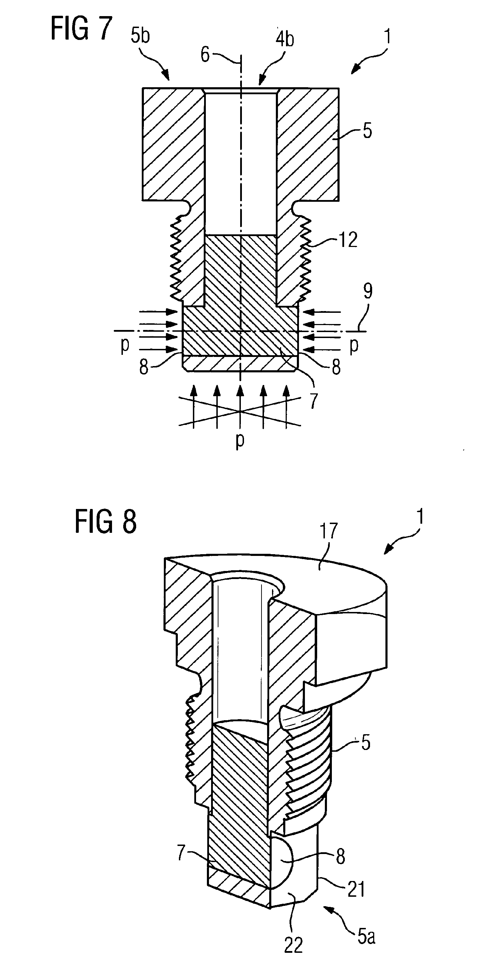

Fig. 7 zeigt einen Schnitt einer weiteren Ausführungsform eines erfindungsgemäßen Verschlusses 1. Dabei ist der Einlasskanal 8 als eine im rechten Winkel zur Achse 6 des Verschlusskörpers 5 verlaufende Querbohrung ausgebildet ist, die mit einer axialen Sackbohrung 4b kommunizierend verbunden ist, welche sich vom zweiten axialen Endabschnitt 5b her bis zu der Querbohrung 8 erstreckt. Das Schmelzsicherungselement 7 füllt den Einlasskanal 8 vollständig aus und erstreckt sich in der Sackbohrung 4b in Richtung zu dem zweiten axialen Endabschnitt 5b in etwa bis zu einem Drittel der axialen Länge des Verschlusses 1.

Mit den Pfeilen und dem Symbol "p" (= "pressure" bzw. Druck) - durchgestrichen bzw. nicht durchgestrichen - soll angedeutet werden, dass der Druck des Betriebsmediums lediglich in Richtung senkrecht zur Achse 6 des Verschlusskörpers 5 auf dem Schmelzsicherungselement 7 lastet (p nicht durchgestrichen), dass aber die axiale Druckkomponente durch die besondere geometrische Ausbildung des Einlasskanals 8 wegfällt (p durchgestrichen).

Fig. 8 zeigt eine Schrägansicht der in Fig. 7 gezeigten Ausführungsform. Dabei ist zu erkennen, dass der erste axiale Endabschnitt 5a als ein hervorstehender Zapfen 21 ausgebildet ist, der an gegenüberliegenden Seiten des Verschlusskörpers 5 jeweils eine ebene Seitenwand 22 aufweist.

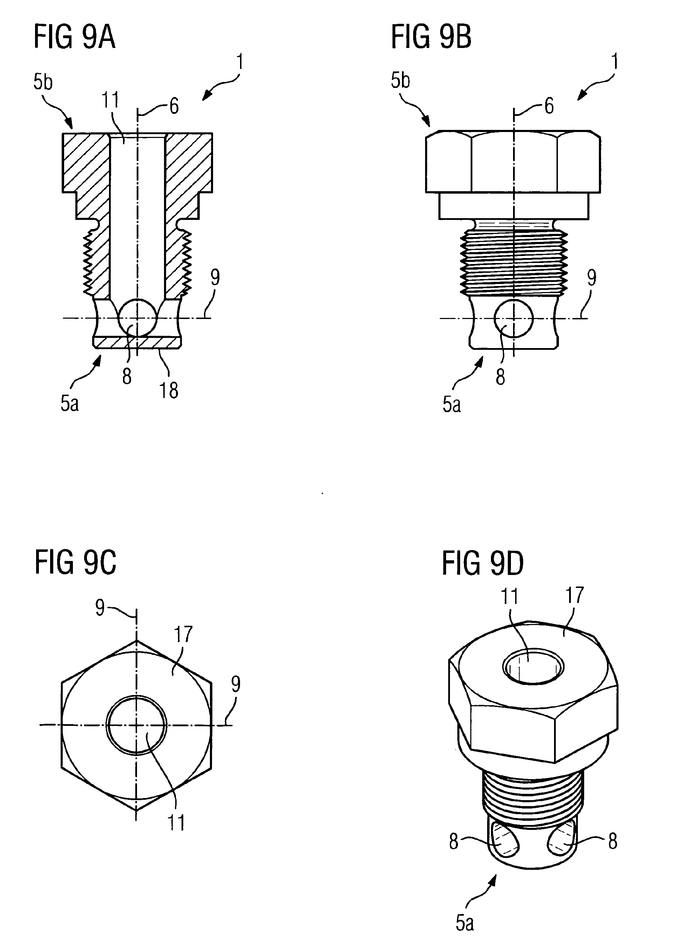

Fig. 9 zeigt einen Schnitt und Ansichten einer weiteren Ausführungsform eines erfindungsgemäßen Verschlusses. Fig. 9A zeigt einen Schnitt, Fig. 9B eine Seitenansicht, Fig. 9C eine Ansicht auf den zweiten axialen Endabschnitt 5b bei Sicht entlang der Achse 6 des Verschlusskörpers 5, und Fig. 9D eine Schrägansicht auf den zweiten axialen Endabschnitt 5b.

Der Verschluss weist in seinem ersten axialen Endabschnitt 5a zwei den Verschlusskörper 5 vollständig durchdringende Querbohrungen 8 auf, die sich in der Achse 6 des Verschlusskörpers 5 des unter einem Winkel von 90 Grad kreuzen. Der Winkel zwischen der Längsachse der als Einlasskanal dienenden Querbohrungen 8 und der Achse 6 des Verschlusskörpers 5 beträgt 90 Grad.

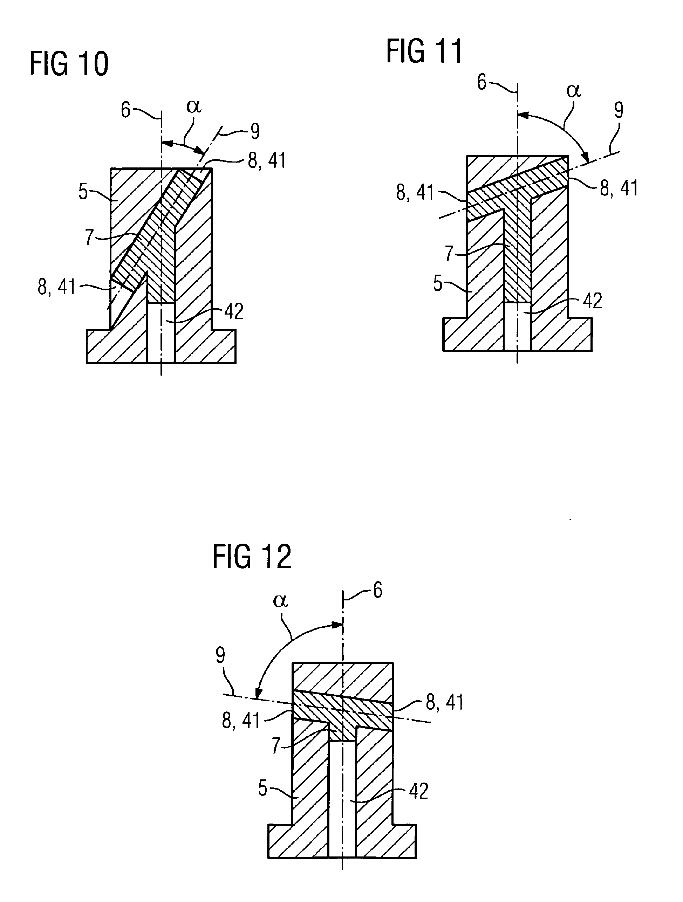

Figs. 10, 11 und 12 zeigen Schnitte verschiedener Ausführungsformen eines erfindungsgemäßen Verschlusses in Form einer Schmelzsicherungsschraube. Gegenüber den in Figs. 4-6 gezeigten Ausführungsformen durchdringt der Einlasskanal 8 den Verschlusskörper 5 vollständig. Die Längsachse 9 des Einlasskanals 8 bildet mit der Achse des zweiten Durchlassabschnitts 42, die hier mit der Achse 6 des Verschlusskörpers 5 zusammenfällt, einen Winkel α größer 0 Grad. Dabei liegt der Winkel α in Fig. 10 bei ca. 25 Grad, in Fig. 11 bei ca. 75 Grad und in Fig. 12 bei ca. 85 Grad.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verschluss (1) mit thermischer Sicherungsfunktion zum fluiddichten Verschließen einer Öffnung (2) eines Behälters (3), umfassend
- einen mit einem Durchlass (4) versehenen Verschlusskörper (5), welcher, mit einem auf einer Achse (6) des Verschlusskörpers (5) liegenden, ersten Endabschnitt (5a) voraus, in die Behälteröffnung (2) einführbar und darin lösbar fixierbar ist, und
- ein in den Durchlass (4) eingefügtes Schmelzsicherungselement (7), welches den Durchlass (4) zumindest mittelbar verschlossen hält,
wobei der Durchlass (4) von einem Einlass (4a) im ersten axialen Endabschnitt (5a) zu einem Auslass (4b) in einem zweiten, entgegengesetzten axialen Endabschnitt (5b) des Verschlusskörpers (5) verläuft und einen ersten, am Einlass (4a) beginnenden Durchlassabschnitt (41) und einen zweiten, an den mindestens einen Einlasskanal (8) anschließenden Durchlassabschnitt (42) aufweist,
wobei der erste Durchlassabschnitt (41) aus mindestens einem Einlasskanal (8) besteht, welcher unter einem Winkel α größer 0 Grad bezogen auf den zweiten Durchlassabschnitt (42) verläuft, und
wobei das Schmelzsicherungselement (7) zumindest in dem mindestens einen Einlasskanal (8) angeordnet ist.

2. Verschluss (1) nach Anspruch 1, wobei der Winkel α in einem Bereich von 10 bis 170 Grad, vorzugsweise von 35 bis 135 Grad, weiter vorzugsweise von 85 bis 95 Grad, liegt.

3. Verschluss (1) nach Anspruch 1 oder 2, wobei der mindestens eine Einlasskanal (8) jeweils als eine Querbohrung (10) ausgebildet ist.

4. Verschluss (1) nach Anspruch 3, wobei der Verschlusskörper (5) N Querbohrungen (10) aufweist, mit N = 1, 2, 3, etc.

5. Verschluss (1) nach einem der vorhergehenden Ansprüche, wobei der mindestens eine Einlasskanal (8) den Verschlusskörper (5) vollständig quer durchdringt.

6. Verschluss (1) nach einem der vorhergehenden Ansprüche, wobei der zweite Durchlassabschnitt (42) am Auslass (4b) endet und parallel zu der Achse (6) des Verschlusskörpers (5) verläuft.

7. Verschluss (1) nach Anspruch 6, wobei der zweite Durchlassabschnitt als eine axiale Sackbohrung (11) in dem Verschlusskörper (5) ausgebildet ist.

8. Verschluss (1) nach Anspruch 6 oder 7, wobei das Schmelzsicherungselement (7) in dem mindestens einen Einlasskanal (8) und dem zweiten Durchlassabschnitt angeordnet ist.

9. Verschluss (1) nach einem der vorhergehenden Ansprüche, wobei der Verschlusskörper (5) als ein Schraubenkörper ausgebildet ist, welcher an seinem äußeren Umfang (19) ein Gewinde (12) zum Eindrehen in ein in der Behälteröffnung (2) angeordnetes Gegengewinde aufweist.

10. Verschluss (1) nach einem der vorhergehenden Ansprüche, wobei eine Stirnseite (18) des ersten Endabschnitts (5a) des Verschlusskörpers (5), welche bei Betrachtung des Verschlusses (1) entlang der Achse (6) des Verschlusskörpers (5) sichtbar ist, eine geschlossene Fläche ist.

11. Verschluss (1) nach einem der vorhergehenden Ansprüche, wobei der erste axiale Endabschnitt (5a) als ein Zapfen (21) ausgebildet ist.

12. Verschluss (1) nach Anspruch 11, wobei der Zapfen (21) mindestens eine abgeflachte Seitenwand (22) aufweist, in welcher der Durchlass (4) in den Verschlusskörper (5) eintritt.

13. Hydrodynamische Kupplung (20), umfassend ein ein Betriebsfluid (13) aufnehmendes Kupplungsgehäuse (3) mit einer Öffnung (2) und einen Verschluss (1) nach einem der vorhergehenden Ansprüche, wobei der Verschluss (1) mit dem ersten axialen Endabschnitt (5a) voraus in die Behälteröffnung (2) eingeführt und darin lösbar fixiert ist.

14. Hydrodynamische Kupplung (20) nach Anspruch 13, wobei der Durchlass (4) in dem im Einbauzustand des Verschlusses (1) zum Inneren des Kupplungsgehäuses (3) hin orientierten ersten axialen Endabschnitt (5a) des Verschlusskörpers (5) unter einem Winkel α größer 0 Grad zur Achse (6) des Verschlusskörpers (5) in den Verschlusskörper (5) eintritt.

15. Hydrodynamische Kupplung (20) nach Anspruch 13 oder 14, wobei der mindestens eine Einlasskanal (8) so im Verschlusskörper (5) angeordnet ist, dass in einem Betriebszustand, bei dem der Verschluss (1) in das Betriebsfluid (13) eingetaucht ist, das Betriebsfluid (13) das Schmelzsicherungselement (7) unmittelbar kontaktiert.

16. Verwendung des Verschlusses (1) nach einem der Ansprüche 1 bis 12 als eine Schmelzsicherung für eine hydrodynamische Kupplung (20) mit einem ein Betriebsfluid (13) aufnehmenden Kupplungsgehäuse (3).
